# EUROPEAN PATENT SPECIFICATION

(11) **EP 1 617 703 B1**
(45) Date of publication and mention of the grant of the patent: **22.05.2013**
(21) Application number: 05014992.1
(22) Date of filing: 11.07.2005
(51) Int. Cl.: H04R 7/04

(54) **Speaker apparatus using display window**
Lautsprechersvorrichtung mit Verwendung eines Displayfensters
Dispositif haut-parleur utilisant une fenêtre d'affichage

(30) Priority: 16.07.2004 KR 2004055737
(43) Date of publication of application: 18.01.2006
(73) Proprietor: LG Electronics, Inc., Seoul, 150-721 (KR)
(72) Inventor: Kang, Chung-Gu, Seongnam Gyeonggi-Do (KR)
(74) Representative: Beyer, Andreas

(56) References cited:
- EP-A2- 0 323 110
- WO-A-03/049493
- WO-A-2004/019652
- WO-A1-00/69212
- WO-A2-01/39541
- WO-A2-97/09842
- FR-A- 2 336 721
- GB-A- 2 062 408
- GB-A- 2 387 500
- JP-A- 2003 102 087
- US-A- 5 025 474
- US-A1- 2001 026 625
- US-A1- 2002 065 113
- US-A1- 2002 075 135
- US-A1- 2002 118 847

## Description

### BACKGROUND OF THE INVENTION

### 1. Field of the Invention

The present invention relates to a speaker apparatus, and particularly, to a speaker apparatus for a mobile communications terminal using a display window.

### 2. Description of the Related Art

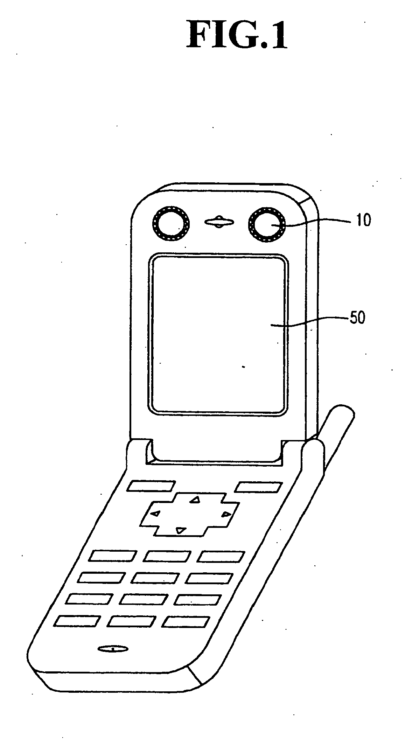

Development of communication techniques and increase of users' requirements have recently enabled mobile communications terminals (hereinafter, referred to as a 'terminal') to provide multimedia functions such as music, moving pictures, games, and the like in addition to a simple calling function. In order to support such multimedia functions, as shown in Fig. 1, the terminal has been equipped with a high-functional loud speaker 10 independently of a typical receiver speaker.

The loud speaker 10 includes one or two circular speakers with a diameter of approximately 10~15mm, and is generally mounted in a case or a hinge unit in case of a folder-type terminal.

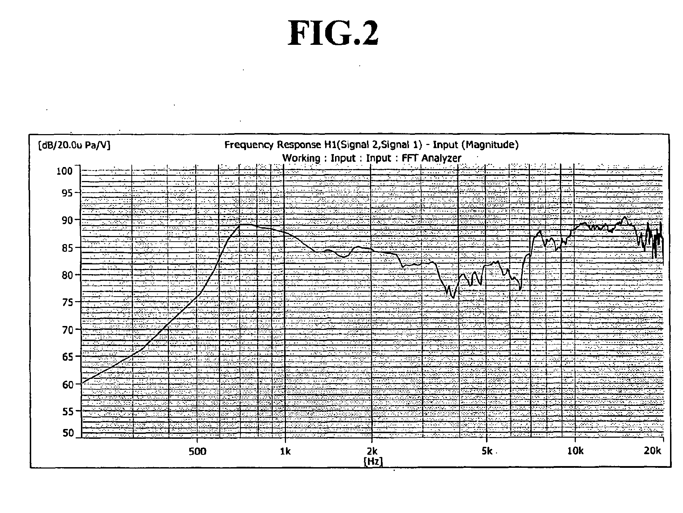

However, because the loud speaker 10 has the diameter of 10~15mm, as shown in Fig. 2, it can be checked that a reproducing output is remarkably decreased at a frequency region under 700Hz (low sound). This is why a reproducing frequency characteristic is moved toward a high frequency as a vibration plate of the speaker gets smaller. This problem can simply be solved by installing a speaker with a long diameter in the terminal, which may cause certain limitations in a structure of the terminal.

WO 2004/019652 A2 relates to a loudspeaker comprising a membrane, a first excitation device for producing structure-bome noise in the membrane, and a second excitation device which is different to the first and is used to displace the membrane in a longitudinal oscillating movement perpendicularly to the membrane expansion direction. The problem of the too weak bass tone reproduction of the quantity opposing the invisible integration or installation is solved by introducing a second excitation system which moves the membrane, or the plate used as a membrane, back and forth in a uniform manner, in addition to the bending oscillations of the structure-borne noise. Sound reproduction is thus rendered possible over the entire acoustic frequency range, without hindering the aim of invisible integration or installation.

WO 03/049493 A1 refers to a mobile terminal device comprising an opening in the area of the terminal device's display field that is covered at least in part by a display window which radiates sound waves by means of actuators and is elastically mounted to the housing. The aim is to improve the mounting of the display window by substantially rigidly fixing at least one segment of the display window's edge to the housing. The display window is configured in an elastic manner inwards from the at least one substantially rigidly fixed segment so as to allow the display window to radiate sound waves.

US 2001/0026625 A1 relates to a loudspeaker drive unit comprising a visual display screen, a resonant panel-form member positioned adjacent to the display screen and at least a portion of which is transparent and through the display screen is visible, and vibration exciting means to cause the panel-form member to resonate to act as an acoustic radiator.

FR 2 336 721 refers to an electro-acoustic transducer of electromagnetic type which is composed of an exciting part having a magnetic core wound with an exciting coil, a vibrating plate provided opposite to the magnetic core at an interval and a ferromagnetic thin plate mounted to the vibrating plate.

### SUMMARY OF THE INVENTION

Therefore, an object of the present invention is to provide a speaker apparatus capable of effectively reproducing sound in a low frequency region by using a display window as a vibration plate.

To achieve these and other advantages and in accordance with the purpose of the present invention, as embodied and broadly described herein, there is provided a speaker apparatus using a display window as defined by independent claim 1. Preferred embodiments of the speaker apparatus according to the present invention are defined by dependent claims 2 to 16.

A mobile communications terminal comprising the speaker apparatus according to the present invention is defined by claim 17.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Fig. 1 is a perspective view showing a mobile communications terminal provided with a related art loud speaker;
Fig. 2 shows frequency characteristics of outputs of the related art loud speaker;
Fig. 3 is a partial sectional view showing a structure of a speaker apparatus using a display window according to an embodiment of the present invention;
Fig. 4 is a plane view showing positions of support member and vibrator of the speaker apparatus using the display window according to the present invention; and
Fig. 5 shows an example in which the speaker apparatus using the display window according to the embodiment of the present invention is coexistent with the related art loud speaker.

### DETAILED DESCRIPTION OF THE PREFERRED EMBODIMENTS

Reference will now be made in detail to the preferred embodiments of the present invention, examples of which are illustrated in the accompanying drawings.

The present invention provides a speaker apparatus for a mobile communications terminal capable of effectively reproducing sound in a low frequency region by using a display window as a vibration plate. For this purpose, the present invention embodies a speaker apparatus for using a display window as a vibration plate in which a permanent magnet is mounted in at least one or more edges of the display window and an electromagnet is positioned to face the permanent magnet. More particularly, the size of the display window in each mobile communications terminal is different depending on the type of terminal. A folder-type terminal uses the display window with a diameter of about 50mm, which corresponds to approximately three times as big as the display window with the diameter of 15~17mm in the speaker typically used in the related art, so as to be advantageous to reproduce a low sound.

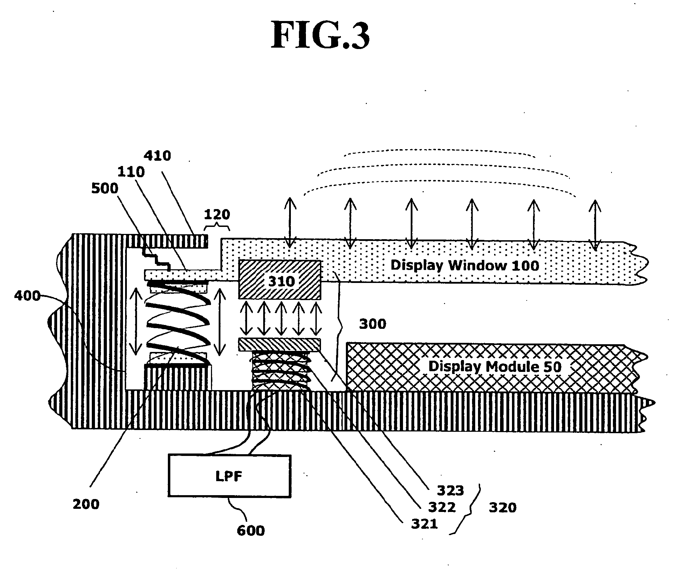

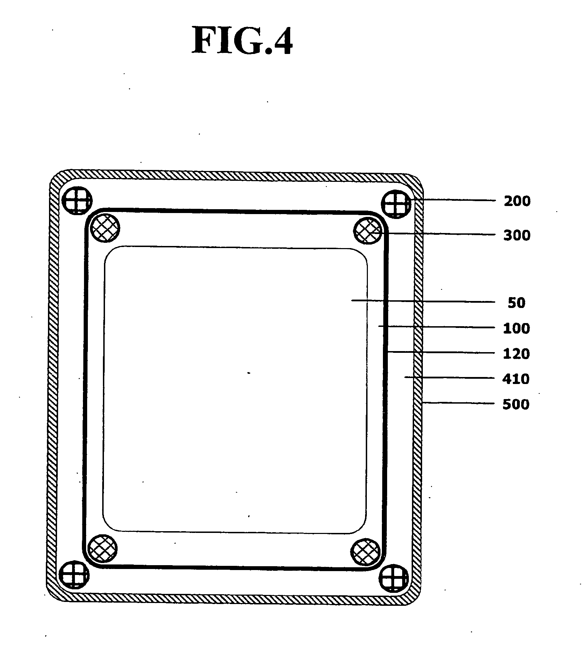

Fig. 3 is a partial sectional view showing a structure of a speaker apparatus using a display window according to an embodiment of the present invention, and Fig. 4 is a plane view showing an installation position of each support member and vibrator in the speaker apparatus using the display window according to the present invention.

Referring to Figs. 3 and 4, the speaker apparatus using the display window according to the present invention includes: a display window 100 (i.e., LCD (Liquid Crystal Display) window) for protecting a display module 50; a support member 200 elastically supporting the display window 100 to form a certain distance between the display window 100 and the display module 50; and a vibrator 300 for vibrating the display window 100 when an electronic audio signal is inputted. For instance, the support member 200 and the vibrator 300, as shown in Fig. 4, can be mounted in each of four edges of the display window 100.

The display module 50 is an output interface for displaying information of a terminal to the exterior. For instance, a LCD (Liquid Crystal Display) module is used as the display module 50. The display module 50 is weak to an external impact, so as to be generally concaved by a certain depth. The transparent display window 100 is also installed outside of the display module 50 to thus protect the display module 50 from being damaged. Especially, the concaved portion serves as a cabinet 400 and also reflects sound generated by the vibration, by which the sound is emitted to the exterior in a single direction.

The display window 100 may be embodied in an arbitrary shape, however, it forms square a bit larger than the square display module 50. A rib 110 which is a part of an outer circumference of the display window 100 is positioned to be almost overlapped with a rib 410 protruded from a side surface of the cabinet 400, and accordingly both the ribs 110 and 410 prevent the display window 100 from being separated from the cabinet 400. A stopping jaw 120 is provided at a portion where the display window and the rib 410 are overlapped. The stopping jaw 120 and the rib 410 have a certain gap therebetween, and accordingly the rib 410 does not act as an obstacle which disturbs the vibration of the display window.

Furthermore, a damper 500 is installed between the two ribs 110 and 410, so as to prevent impurities from being introduced into the cabinet 400 and to allow the display window 100 to vibrate in a certain position without being warped. The damper 500 is formed of compression sponge or resin used in the typical cone speaker.

Each of the four edges of the display window 100 is connected with the cabinet 400 by the support member 200. The display window 100 is elastically supported by the support member 200, and can thus vibrate by the vibrator 300. The support member 200 is formed of a coil spring and elastically supports the display window 100 enough for the vibrator 300 to be installed between the display window 100 and the display module 50. When an external force by the vibrator 300 is applied to the display window 100, the support member 200 vibrates and absorbs a load to restore the display window 100 to the original position.

The vibrator 300 is equipped in each of the four edges of the display window 100, respectively. Each vibrator 300 includes a piece of magnet 310 installed on the display module 50 and a magnetism generator 320 installed to face the piece of magnet 310. Preferably, the piece of magnet 310 is embodied with a permanent magnet. The magnetism generator 320 is embodied with a magnet capable of generating great magnetism, for instance, an electromagnet having an iron core in the center of a solenoid 321, the iron core having a great magnetic permeability. Here, a particular shape of plate is provided at the end of the magnetism generator 320, which prevents the solenoid 321 from being separated.

When a time-variable electric audio signal is inputted into the solenoid 321 to thus change a strength or a direction of a magnetic field, the piece of magnet 310 moves. Accordingly, the display window 100 vibrates and generates a vibration sound. In this case, in order to make only a low frequency signal corresponding to a low sound be inputted in the solenoid 321 among electric audio signals, a LPF (Low Pass Filter) 600 is connected to the magnetism generator 320 for use. Preferably, the LPF 600 may be equipped by being added to an audio interface integrated circuit.

Therefore, when the LPF 600 is connected to the magnetic generator 320, an audio interface (not shown) managing an input/output of a microphone and speaker provided to the mobile communications terminal outputs the electric audio signal to the LPF 600. The LPF 600 filters the electric audio signal and inputs into the solenoid 321 only the low frequency signal corresponding to the low sound.

An operation of such constructed speaker apparatus using the display window according to the present invention will now be explained.

When sound should be outputted according to users' terminal using patterns, the audio interface for managing the input/output of the microphone/speaker outputs the electric audio signal to the magnetism generator 320 directly or via the LPF 600. Therefore, a polarity of the magnetism generator 320 is changed by the electric audio signal. This change of the polarity makes the permanent magnet 310 mounted in the display window 100 move. As the permanent magnet 310 moves, the display window vibrates to generate a vibration sound.

The magnetism of the magnetism generator 320 is determined according to the strength of the electric audio signal applied to the solenoid 321. The change of the magnetism influences an amplitude of the vibration of the display window 100, namely, the strength of the audio signal generated by the vibration of the display window 100. In addition, while the display window 100 vibrates, the support member 200, namely, the coil spring 200 supports the display window 100 and thus the display window can stably vibrate.

Therefore, a vibration sound having a strong low sound is outputted by the vibration of the display window 100. When the LPF 600 is mounted in the audio interface integrated circuit, only the low sound under a particular frequency is outputted.

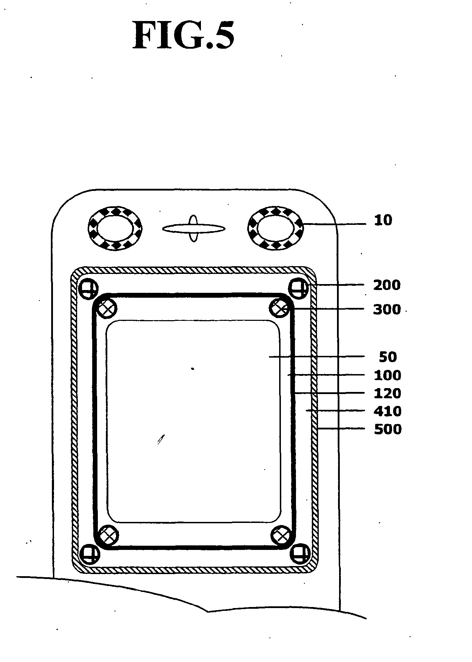

The operation of the speaker apparatus using the display window in case that only the speaker apparatus using the display window is installed in the mobile communications terminal has been explained. However, it is not limited thereto but the related art loud speaker 10, as shown in Fig. 5, can be installed with the speaker apparatus using the display window according to the present invention. In this case, the loud speaker 10 acts as a tweeter for generally outputting sound in a high frequency bandwidth, and the speaker apparatus according to the present invention acts as a woofer for generally outputting sound in a low frequency bandwidth, which results in reproducing sound more efficiently.

As aforementioned, in the present invention, the speaker apparatus using the larger-sized display window than the conventional speaker as the vibration plate can be embodied, which leads to an effective reproduction of a low sound region which has been difficult to be reproduced using the conventional speaker. In particular, when the speaker apparatus according to the present invention is used together with the loud speaker of the related art in the mobile communications terminal, it is more effective to reproduce sound.

Furthermore, in the present invention, a display window is used as a vibration plate, and accordingly the extra space for installing the speaker apparatus is not required. As a result, the mobile communications terminal can effectively be smaller.

## Claims

1. A speaker apparatus using a display window for a mobile communications terminal comprising:
- a display module (50);
- a display window (100) for protecting display module (50);
- a support member (200) for elastically supporting the display window (100); the
- a vibrator (300) for vibrating the display window (100) to generate a vibration sound when an electric audio signal is inputted; and
- a cabinet (400);
**characterised in that** the display window (100), the support member (200) and the vibrator (300) are positioned in the cabinet (400) from which a first rib (410) is protruded, the display H window (100) has a second rib (110) at its outer circumference, wherein the first rib (410), the second rib (110) and the display window (100) are parallel to each other and the second rib (110) is arranged below the first rib (410).

2. The apparatus of claim 1, wherein the support member (200) is a coil spring.

3. The apparatus of claim 1, wherein the support member (200) supports each of four edges of the display window (100).

4. The apparatus of claim 1, wherein the vibrator (300) is positioned at an inner side of at least one or more edges of the display window (100).

5. The apparatus of claim 1, wherein the vibrator (300) comprises:
- a piece of magnet (310) equipped in the display window (100); and
- a magnetism generator (320) arranged to face the piece of magnet (310), for changing the magnetism according to the strength of the electric audio signal.

6. The apparatus of claim 5, wherein the magnetism generator (320) is an electromagnet.

7. The apparatus of claim 1, wherein the support member (200) elastically supports the display window (100) enough for the vibrator (300) to be installed between the display window (100) and the display module (50).

8. The apparatus of claim 1, wherein the cabinet (400) has a concaved shape.

9. The apparatus of claim 8, wherein a stopping jaw (120) is equipped at an outer circumference of the display window (100), and the first rib (410) is protruded from the cabinet (400) to face the stopping jaw (120).

10. The apparatus of claim 9, wherein the stopping jaw (120) and the first rib (410) have a certain gap therebetween so as not to influence on each other while vibrating.

11. The apparatus of claim 9, wherein the second rib (110) is protruded from the stopping jaw (120) so as to prevent the display window (100) from being separated from the mobile communications terminal, and a damper (500) is installed between the first (410) and second ribs (110).

12. The apparatus of claim 11, wherein the damper (500) is formed of compression sponge or resin.

13. The apparatus of claim 1, further comprising a low pass filter (600) for receiving electric audio signals inputted from an audio interface and thus outputting to the vibrator (500) only an electric audio signal under a particular frequency.

14. The apparatus of claim 5, wherein the piece of magnet (310) is mounted in at least one or more edges of the display window (100).

15. The apparatus of claim 5, wherein:
- the piece of magnet (310) is mounted in each edge of the display window (100); and
- the magnetism generator (320) is installed to face the piece of magnet (310), for changing a magnetism according to an electric audio signal outputted from an audio interface to thusly vibrate the display window (100), thereby generating a vibration sound.

16. The apparatus of claim 5, wherein the piece of magnet (310) is a permanent magnet.

17. A mobile communications terminal comprising:
- a loudspeaker (10); and
- the speaker apparatus of any one of claims 1 to 16,
wherein the loudspeaker (10) is adapted to be used as a tweeter and the speaker apparatus is adapted to be used as a woofer.

## Patentansprüche

1. Lautsprechervorrichtung für ein Mobilkommunikationsendgerät, die ein Anzeigefenster verwendet, mit:
- einem Anzeigemodul (50);
- einem Anzeigefenster (100) zum Schutz des Anzeigemoduls (50);
- einem Halterelement (200) zum elastischen Halten des Anzeigefensters (100);
- einer Vibrationsvorrichtung (300), um das Anzeigefenster (100) zum Vibrieren zu bringen, um dadurch ein Vibrationsgeräusch zu erzeugen, wenn ein elektrisches Audiosignal zugeführt wird; und
- einem Gehäuse (400);
dadurch gekennzeichet, dass das Anzeigefenster (100), das Halterelement (200) und die Vibrationsvorrichtung (300) in dem Gehäuse (400) angeordnet sind, von dem eine erste Rippe (410) hervorsteht, wobei das Anzeigefenster (100) an seinem äußeren Umfang eine zweite Rippe (110) hat, wobei die erste Rippe (410), die zweite Rippe (110) und das Anzeigefenster (100) sich parallel zueinander erstrecken und die zweite Rippe (110) unterhalb der ersten Rippe (410) angeordnet ist.

2. Vorrichtung nach Anspruch 1, wobei das Halterelement (200) eine Spiralfeder ist.

3. Vorrichtung nach Anspruch 1, wobei das Halterelement (200) jeden der vier Ränder des Anzeigefensters (100) hält.

4. Vorrichtung nach Anspruch 1, wobei die Vibrationsvorrichtung (300) an einer Innenseite mindestens eines oder mehrerer Ränder des Anzeigefensters (100) angeordnet ist.

5. Vorrichtung nach Anspruch 1, wobei die Vibrationsvorrichtung (300) umfasst:
- ein Magnetteil (310), das in dem Anzeigefenster (100) angeordnet ist; und
- eine Vorrichtung (320) zur Erzeugung von Magnetismus, die dem Magnetstück (310) zugewandt angeordnet ist, um den Magnetismus entsprechend der Stärke des elektrischen Audiosignals zu ändern.

6. Vorrichtung nach Anspruch 5, wobei die Vorrichtung (320) zur Erzeugung von Magnetismus ein Elektromagnet ist.

7. Vorrichtung nach Anspruch 1, wobei das Halterelement (200) das Anzeigefenster (100) elastisch genug hält, dass die Vibrationsvorrichtung (300) zwischen dem Anzeigefenster (100) und dem Anzeigemodul (50) angeordnet werden kann.

8. Vorrichtung nach Anspruch 1, wobei das Gehäuse (400) eine konkave Form hat.

9. Vorrichtung nach Anspruch 8, wobei an einem äußeren Umfang des Anzeigefensters (100) eine Anschlagbacke (120) angeordnet ist und die erste Rippe (410) so von dem Gebäude (400) hervorsteht, dass sie der Anschlagbacke (120) zugewandt ist.

10. Vorrichtung nach Anspruch 9, wobei die Anschlagbacke (120) und die erste Rippe (410) mit einer gewissen Lücke dazwischen angeordnet sind, um einander nicht zu beeinträchtigen, während sie vibrieren.

11. Vorrichtung nach Anspruch 9, wobei die zweite Rippe (110) so von der Anschlagbacke (120) hervorsteht, dass das Anzeigefenster (100) daran gehindert wird, von dem Mobilkommunikationsendgerät getrennt zu werden, und ein Dämpfer (500) zwischen der ersten (410) und der zweiten Rippe (110) angeordnet ist.

12. Vorrichtung nach Anspruch 11, wobei der Dämpfer (500) aus Kompressionsschwamm oder -harz gebildet ist.

13. Vorrichtung nach Anspruch 1, die ferner ein Tiefpassfilter (600) zum Empfangen von elektrischen Audiosignalen, die von einer Audioschnittstelle zugeführt werden, und somit zum Ausgeben nur eines elektrischen Audiosignals unter einer speziellen Frequenz an die Vibrationsvorrichtung (500) aufweist.

14. Vorrichtung nach Anspruch 5, wobei das Magnetstück (310) an mindestens einem oder mehreren Rändern des Anzeigefensters (100) angebracht ist.

15. Vorrichtung nach Anspruch 5, wobei:
- das Magnetstück (310) an jedem Rand des Anzeigefensters (100) angebracht ist; und
- die Vorrichtung (320) zur Erzeugung von Magnetismus so angeordnet ist, dass sie dem Magnetstück (310) zugewandt ist, um einen Magnetismus entsprechend einem elektrischen Audiosignal, das von einer Audioschnittstelle ausgegeben wird, zu ändern, um dadurch das Anzeigefenster (100) so vibrieren zu lassen, dass ein Vibrationsgeräusch erzeugt wird.

16. Vorrichtung nach Anspruch 5, wobei das Magnetstück (310) ein Dauermagnet ist.

17. Mobilkommunikationsendgerät mit:
- einem Lautsprecher (10); und
- der Lautsprechervorrichtung nach einem der Ansprüche 1 bis 16,
wobei der Lautsprecher (10) dazu ausgebildet ist, als ein Hochtonlautsprecher verwendet zu werden, und die Lautsprechervorrichtung dazu ausgebildet ist, als ein Tieftonlautsprecher verwendet zu werden.

## Revendications

1. Dispositif de haut-parleur utilisant une fenêtre d'affichage pour un terminal de communication mobile comprenant :
- un module d'affichage (50) ;
- une fenêtre d'affichage (100) destinée à protéger le module d'affichage (50) ;
- un élément de support (200) destiné à supporter de manière élastique la fenêtre d'affichage (100) ;
- un vibreur (300) destiné à faire vibrer la fenêtre d'affichage (100) pour générer un son de vibrations lorsqu'un signal audio électrique est délivré en entrée ; et
- une enceinte (400) ;
**caractérisé en ce que** la fenêtre d'affichage (100), l'élément de support (200) et le vibreur (300) sont positionnés dans l'enceinte (400) à partir de laquelle une première nervure (410) fait saillie, la fenêtre d'affichage (100) comporte une deuxième nervure (110) au niveau de sa circonférence externe, dans lequel la première nervure (410), la deuxième nervure (110) et la fenêtre d'affichage (100) sont parallèles les unes par rapport aux autres et la deuxième nervure (110) est disposée au-dessous de la première nervure (410).

2. Appareil selon la revendication 1, dans lequel l'élément de support (200) est un ressort hélicoïdal.

3. Appareil selon la revendication 1, dans lequel l'élément de support (200) supporte chacun des quatre bords de la fenêtre d'affichage (100).

4. Appareil selon la revendication 1, dans lequel le vibreur (300) est positionné au niveau d'un côté interne d'au moins un ou plusieurs bords de la fenêtre d'affichage (100).

5. Appareil selon la revendication 1, dans lequel le vibreur (300) comprend :
- une pièce d'aimant (310) prévue dans la fenêtre d'affichage (100) ; et
- un générateur de magnétisme (320) agencé pour être en regard de la pièce d'aimant (310), destiné à changer le magnétisme conformément à l'intensité du signal audio électrique.

6. Appareil selon la revendication 5, dans lequel le générateur de magnétisme (320) est un électroaimant.

7. Appareil selon la revendication 1, dans lequel l'élément de support (200) supporte de manière élastique la fenêtre d'affichage (100) suffisamment pour que le vibreur (300) soit installé entre la fenêtre d'affichage (100) et le module d'affichage (50).

8. Appareil selon la revendication 1, dans lequel l'enceinte (400) présente une forme concave.

9. Appareil selon la revendication 8, dans lequel une mâchoire d'arrêt (120) est prévue au niveau d'une circonférence externe de la fenêtre d'affichage (100), et la première nervure (410) fait saillie depuis l'enceinte (400) pour être en regard de la mâchoire d'arrêt (101).

10. Appareil selon la revendication 9, dans lequel la mâchoire d'arrêt (120) et la première nervure (410) présentent un certain espacement entre elles de façon à ne pas s'influencer l'une l'autre pendant la vibration.

11. Appareil selon la revendication 9, dans lequel la deuxième nervure (110) fait saillie depuis la mâchoire d'arrêt (120) de façon à empêcher que la fenêtre d'affichage (100) soit séparée du terminal de communication mobile, et un amortisseur (500) est installé entre les première (410) et deuxième (110) nervures.

12. Appareil selon la revendication 11, dans lequel l'amortisseur (500) est constitué d'une éponge de compression ou de résine.

13. Appareil selon la revendication 1, comprenant en outre un filtre passe-bas (600) destiné à recevoir des signaux audio électriques délivrés en entrée depuis une interface audio et ainsi délivrer en sortie vers le vibreur (500) seulement un signal audio électrique sous une fréquence particulière.

14. Appareil selon la revendication 5, dans lequel la pièce d'aimant (310) est montée dans au moins un ou plusieurs bords de la fenêtre d'affichage (100).

15. Appareil selon la revendication 5, dans lequel :
- la pièce d'aimant (310) est montée dans chaque bord de la fenêtre d'affichage (100) ; et
- le générateur de magnétisme (320) est installé pour être en regard de la pièce d'aimant (310), pour changer un magnétisme conformément à un signal audio électrique délivré en sortie depuis une interface audio pour ainsi faire vibrer la fenêtre d'affichage (100), générant ainsi un son de vibrations.

16. Appareil selon la revendication 5, dans lequel la pièce d'aimant (310) est un aimant permanent.

17. Terminal de communication mobile comprenant :
- un haut-parleur (10) ; et
- l'appareil de haut-parleur selon l'une quelconque des revendications 1 à 16,
dans lequel le haut-parleur (10) est adapté pour être utilisé en tant que haut-parleur d'aigus et l'appareil de haut-parleur est adapté pour être utilisé en tant que haut-parleur de graves.
